# DEMANDE DE BREVET EUROPEEN

(11) **EP 0 890 575 A1**
(43) Date de publication de la demande: **13.01.1999**
(21) Numéro de dépôt: 97401621.4
(22) Date de dépôt: 08.07.1997
(51) Int. Cl.: C07F 7/22, C08F 4/16, C07F 3/06

(54) **Nouveaux composés possédant un élément du groupe 11,12 ou 14 et un ligand tridentate, leur procédé de préparation et leur application notamment comme catalyseurs de polymérisation**

(71) Demandeur: SOCIETE DE CONSEILS DE RECHERCHES ET D'APPLICATIONS SCIENTIFIQUES (S.C.R.A.S.), 75016 Paris (FR); CENTRE NATIONAL DE LA RECHERCHE SCIENTIFIQUE (CNRS), 75794 Paris Cédex 16 (FR)
(72) Inventeur: Bertrand, Guy, 31320 Pechbusque (FR); Cazaux, Jean-Bernard, 30390 Aramon (FR); Faure, Jean-Luc, 31200 Toulouse (FR); Nguyen, Hank, 31400 Toulouse (FR); Reau, Régis, 31400 Toulouse (FR)
(74) Mandataire: Bourgouin, André

(57) **Abrégé**

La présente invention concerne de nouveaux composés possédant un élément du groupe 11, 12 ou 14 et possédant un ligand tridentate, un procédé pour leur préparation et leur utilisation notamment en tant que catalyseur de polymérisation.

## Description

La présente invention concerne de nouveaux composés possédant un élément du groupe 11, 12 ou 14 et possédant un ligand tridentate, un procédé pour leur préparation et leur utilisation notamment en tant que catalyseur de polymérisation.

Il a été montré que chaque type de catalyseurs utilisés pour les polymèrisations ou copolymèrisations, donne respectivement des polymères ou des copolymères différents notamment en raison de réactions de transestérification qui conduisent à des inversions des centres stéréogènes (Jedlinski et coll., Macromolecules, (1990) 191, 2287 ; Munson et coll., Macromolecules, (1996) 29, 8844 ; Montaudo et coll., Macromolecules, (1996) 29, 6461). Le problème est donc de trouver des systèmes catalytiques nouveaux afin d'obtenir de nouveaux polymères ou copolymères, et plus particulièrement des copolymères séquencés. L'utilisation de systèmes catalytiques permettant d'obtenir des copolymères séquencés, permet le contrôle de l'enchaînement des monomères afin d'obtenir des copolymères spécifiques possédant des propriétés propres. Ceci est particulièrement intéressant pour les copolymères biocompatibles dont la biodégradation est influencée par cet enchaînement.

L'invention a ainsi pour objet les produits de formule générale I 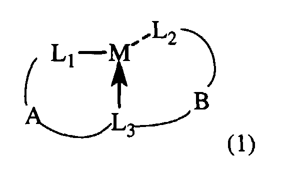 dans laquelle
- M: représente un élément des groupes 11, 12 ou 14 ;
- A et B: représentent, indépendamment, une chaîne carbonée de 2 à 4 atomes de carbone, optionellement substituée par l'un des radicaux substitués (par un ou plusieurs substituants identiques ou différents) ou non substitués suivants : alkyle, cycloalkyle ou aryle, dans lesquels ledit substituant est un atome d'halogène, le radical alkyle, nitro ou cyano ;
- L₁, L₂ et L₃: représentent, indépendamment, un groupe de formule -E₁₅(R₁₅)- dans laquelle
E₁₅ est un élément du groupe 15 et
R₁₅ représente l'atome d'hydrogène ; l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, nitro ou cyano ; un radical de formule RR'R''E₁₄- dans laquelle E₁₄ est un élément du groupe 14 et R, R' et R'' représentent, indépendamment, l'atome d'hydrogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule SO₂R'₁₅ dans laquelle R'₁₅ représente un atome d'halogène, un radical alkyle, haloalkyle ou aryle éventuellement substitué par un ou plusieurs substituants choisis parmi les radicaux alkyle, haloalkyle et halogène.

Dans les définitions indiquées ci-dessus, l'expression halogène représente un atome de fluor, de chlore, de brome ou d'iode, de préférence chlore. L'expression alkyle représente de préférence un radical alkyle ayant de 1 à 6 atomes de carbone linéaire ou ramifié et en particulier un radical alkyle ayant de 1 à 4 atomes de carbone tels que les radicaux méthyle, éthyle, propyle, isopropyle, butyle, isobutyle, sec-butyle et tert-butyle.

Le terme haloalkyle désigne de préférence les radicaux dans lesquels le radical alkyle est tel que défini ci-dessus et est substitué par un ou plusieurs atomes d'halogène tel que défini ci-dessus comme, par exemple, bromoéthyle, trifluorométhyle, trifluoroéthyle ou encore pentafluoroéthyle. Les radicaux alkoxy peuvent correspondre aux radicaux dans lesquels le radical alkyle est tel que défini ci-dessus. On préfère les radicaux méthoxy, éthoxy, isopropyloxy ou tert-butyloxy. Les radicaux alkylthio représentent de préférence les radicaux dans lesquels le radical alkyle est tel que défini ci-dessus comme, par exemple, méthylthio ou éthylthio.

Les radicaux cycloalkyles sont choisis parmi les cycloalkyles monocycliques saturés ou insaturés. Les radicaux cycloalkyles monocycliques saturés peuvent être choisis parmi les radicaux ayant de 3 à 7 atomes de carbone tels que les radicaux cyclopropyle, cyclobutyle, cyclopentyle, cyclohexyle ou cycloheptyle. Les radicaux cycloalkyles insaturés peuvent être choisis parmi les radicaux cyclobutène, cyclopentène, cyclohexène, cyclopentanediène, cyclohexadiène. Les radicaux cycloalkoxy peuvent correspondre aux radicaux dans lesquels le radical cycloalkyle est tel que défini ci-dessus. On préfère les radicaux cyclopropyloxy, cyclopentyloxy ou cyclohexyloxy. Les radicaux cycloalkylthio peuvent correspondre aux radicaux dans lesquels le radical cycloalkyle est tel que défini ci-dessus comme par exemple cyclohexylthio.

Les radicaux aryles peuvent être de type mono ou polycycliques. Les radicaux aryles monocycliques peuvent être choisis parmi les radicaux phényle optionellement substitué par un ou plusieurs radicaux alkyle, tel que tolyle, xylyle, mésityle, cuményle. Les radicaux aryles polycycliques peuvent être choisis parmi les radicaux naphtyle, anthryle, phénanthryle. Les radicaux aryloxy peuvent correspondre aux radicaux dans lesquels le radical aryle est tel défini ci-dessus. On préfère les radicaux phénoxy, 2,4,6-tritertiobutylphénoxy, tolyloxy ou mésityloxy. Les radicaux arylthio désignent de préférence les radicaux dans lesquels le radical aryle est tel que défini ci-dessus comme par exemple dans phénylthio.

L'invention a plus particulièrement pour objet les produits de formule générale 1 telle que définie ci-dessus, caractérisée en ce que
M représente un atome d'étain ou de zinc ;
A et B représentent, indépendamment, une chaîne carbonée de 2 à 4 atomes de carbone, et notamment une chaîne carbonée de 2 atomes de carbone ;
L₁, L₂ et L₃ représentent, indépendamment, un radical de formule -E₁₅(R₁₅)- dans laquelle E₁₅ est un atome d'azote ou de phosphore et R₁₅ représente un radical alkyle ou un radical de formule RR'R''E₁₄- dans laquelle E₁₄ représente un atome de carbone ou de silicium et R, R' et R'' représentent, indépendamment, l'atome d'hydrogène ou un radical alkyle.

De préférence, M représente un atome d'étain ou de zinc ; A et B représentent, indépendamment, une chaîne carbonée de 2 atomes de carbone ; L₁, L₂ et L₃ représentent, indépendamment, un radical de formule -E₁₅(R₁₅)- dans laquelle E₁₅ est un atome d'azote et R₁₅ représente un radical méthyle, éthyle, propyle, isopropyle ou un radical de formule RR'R''E₁₄- dans laquelle E₁₄ représente un atome de silicium et R, R' et R'' représentent, indépendamment, l'atome d'hydrogène ou un radical méthyle, éthyle, propyle ou isopropyle.

Plus particulièrement, l'invention a pour objet les produits décrits ci-après dans les exemples, en particulier les produits répondant aux formules suivantes :
-[(Me₂CHNCH₂CH₂)₂NMe]Sn ;
- [(Me₃SiNCH₂CH₂)₂NMe]Sn.

L'invention a également pour objet un procédé de préparation des produits de formule générale 1 telle que définie ci-dessus, caractérisé en ce que l'on fait réagir un produit de formule I

(L₁-A-L₃-B-L₂)²⁻ , 2Y⁺ (I)

dans laquelle L₁, A, L₃, B et L₂ ont les significations indiquées ci-dessus et Y représente un groupement organométallique, un métal ou l'atome d'hydrogène, avec un produit de formule II

MZ₁Z₂ (II)

dans laquelle M a la signification indiquée ci-dessus et Z₁ et Z₂ représentent, indépendamment, un groupe partant, pour obtenir un produit de formule 1 telle que définie ci-dessus.

La réaction d'un composé de formule générale I avec un composé de formule générale II pour obtenir un composé de formule générale 1, peut être réalisée sous atmosphère inerte telle sous atmosphère de fréon ou d'argon, dans un solvant aprotique, à une température comprise entre -90 et +50 °C. Les composés 1 ainsi obtenus sont purifiés par les méthodes classiques de purification.

En tant que solvant aprotique, on peut utiliser les hydrocarbures aromatiques tels que benzène, toluène ; des hydrocarbures aliphatiques tels que pentane, heptane, hexane, cyclohexane ; des éthers tels que le diéthyléther, dioxane, tétrahydrofurane, éthyltertiobutyl éther.

Dans les composés I, Y représente un groupement organométallique, un métal ou l'atome d'hydrogène. Le groupement organométallique peut être un composé de formule R'''M₁ ou R'''₃M₂ dans laquelle R''' représente un radical alkyle, cycloalkyle, aryle, alkoxy, cycloalkoxy ou aryloxy défini comme précédemment, M₁ est un atome de zinc ou de mercure et M₂ un atome d'étain ou de plomb ; de préférence, le groupement organométallique est choisi parmi les groupements ZnMe, SnMe₃, SnBu₃ ou PbMe₃. Le métal peut être un métal alcalin choisi parmi le lithium, le sodium ou le potassium, ou un métal alcalino-terreux tel que le magnésium.

Dans les composés II, Z₁ et Z₂ représentent, indépendamment un groupe partant tel qu'un atome d'halogène, un groupement alkyle, cycloalkyle, alkoxy, aryle ou aryloxy défini comme précédemment, ou encore un méthanesulphonyloxy, un benzènesulphonyloxy, p-toluènesulphonyloxy.

Les produits de départ de formule I sont des produits connus ou peuvent être préparés à partir de produits connus. Pour leur synthèse, on peut citer les références suivantes : Cloke et coll., J. Chem. Soc., Dalton Trans. (1995) 25; Wilkinson and Stone, Comprehensive Organometallic Chemistry (1982) vol. 1, 557.

Les produits de formule II sont commerciaux ou peuvent être fabriqués par les méthodes connues de l'homme de métier.

L'invention a également pour objet l'utilisation des produits de formule 1 telle que définie ci-dessus, en tant que catalyseurs pour la mise en oeuvre de (co)polymérisation, c'est à dire de polymérisation ou copolymérisation. Lors de la mise en oeuvre de (co)polymérisation, les composés selon l'invention jouent également le rôle d'initiateur ou de régulateur de chaîne.

Les composés de formule 1 sont particulièrement intéressants pour la mise en oeuvre de polymérisation d'hétérocycles. Les hétérocycles peuvent contenir un ou plusieurs hétéroatomes des groupes 15 et/ou 16, et posséder une taille allant de trois à huit chaînons. A titre d'exemple d'hétérocycles répondant à la formulation ci-avant, on peut citer les époxydes, les thioépoxydes, les esters ou thioesters cycliques tels que les lactones, les lactames et les anhydrides.

Les composés de formule 1 sont particulièrement intéressants également pour la mise en oeuvre de (co)polymérisation d'esters cycliques. A titre d'exemple d'esters cycliques, on peut citer les esters cycliques polymères de l'acide lactique et/ou glycolique. Des copolymères statistiques ou séquencés peuvent être obtenus selon que les monomères sont introduits ensemble au début de la réaction, ou séquentiellement au cours de la réaction.

L'invention a également pour objet un procédé de préparation de copolymères, séquencés ou aléatoires, ou de polymères qui consiste à mettre en présence un ou plusieurs monomères, un initiateur de chaînes, un catalyseur de polymérisation et éventuellement un solvant de polymérisation, le dit procédé caractérisé en ce que l'initiateur de chaînes et le catalyseur de polymérisation sont représentés par le même composé qui est choisi parmi les composés de formule (1) telle que définie ci-dessus.

La (co)polymérisation peut s'effectuer soit en solution soit en surfusion. Lors que la (co)polymérisation s'effectue en solution, le solvant de la réaction peut être le (ou l'un des) substrat(s) mis en oeuvre dans la réaction catalytique. Des solvants qui n'interfèrent pas avec la réaction catalytique elle-même, conviennent également. A titre d'exemple de tels solvants, on peut citer les hydrocarbures saturés ou aromatiques, les éthers, les halogénures aliphatiques ou aromatiques.

Les réactions sont conduites à des températures comprises entre la température ambiante et environ 250 °C ; la plage de température comprise entre 40 et 200 °C s'avère plus avantageuse. Les durées de réaction sont comprises entre 1 et 300 heures, et de préférence entre 1 et 72 heures.

Ce procédé de (co)polymérisation convient particulièrement bien pour l'obtention de (co)polymères d'esters cycliques, notamment les esters cycliques polymères de l'acide lactique et/ou glycolique. Les produits obtenus tels que le copolymère lactique glycolique, biodégradables, sont avantageusement utilisés comme support dans des compositions thérapeutiques à libération prolongée. Le procédé convient particulièrement bien également à la polymérisation des époxydes, notamment de l'oxyde de propène. Les polymères obtenus sont des composés qui peuvent être utilisés pour la synthèse de cristaux liquides organiques ou encore comme membranes semi-perméables.

L'invention concerne également des polymères ou copolymères susceptibles d'être obtenus par la mise en oeuvre d'un procédé tel que décrit ci-dessus. La polydispersité (Mw/Mn) des (co)polymères ainsi obtenus peut être modifiée en laissant le mélange réactionnel à la température de la réaction après que la conversion du (des) monomère(s) soit totale. Les masses des (co)polymères sont peu affectées lors de ce processus. Ces phénomènes sont dûs à des réactions de transestérifications inter- ou intra-moléculaires (Kiecheldorf et coll., Macromolecules, (1988) 21, 286).

Les exemples suivants sont présentés pour illustrer les procédures ci-dessus et ne doivent en aucun cas être considérés comme une limite à la portée de l'invention.

### Exemple 1: [(Me₂CHNCH₂CH₂)₂NMe]Sn

### Composé 1 dans lequel M = Sn ; A = B = -CH₂CH₂- ; L₁ = L₂ = NCHMe₂ L₃ = NMe

Dans un tube de Schlenk muni d'un barreau aimanté et purgé sous argon, on introduit successivement 1,00 g (4,7 mmol) de [(Me₂CHNCH₂CH₂)₂NMe]²⁻, 2Li⁺ et 20 ml de diéthyléther. Le mélange réactionnel est refroidi à -78 °C, puis on introduit une suspension de 0,89 g (4,7 mmol) de SnCl₂ dans du diéthyléther. Le mélange réactionnel est ramené à température ambiante puis laissé sous agitation pendant 18 heures à température ambiante. La solution est filtrée et le solvant évaporé. Le composé souhaité est isolé sous forme d'une huile jaune (rendement 74 %). Ce composé est caractérisé par spectroscopie RMN du carbone, du proton et de l'étain.
RMN ¹H (C₆D₆ ; 250 MHz) : 1,49 (d, J_{HH} = 6,2 Hz, 6H, CHCH₃) ; 1,54 (d, J_{HH} = 6,2 Hz, 6H, CHCH₃) ; 2,11 (s, 3H, J 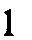 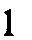 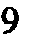 _{SnC} = 20,2 Hz, J 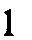 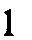 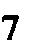 _{SnC}= 17,5 Hz, NCH₃) ; 2,37 (m, 4H, CH₂) ; 3,11 (m, 2H, CH₂) ; 3,67 (sept, J_{HH} = 6,2 Hz, 2H, CHCH₃)
RMN ¹³C (C₆D₆ ; 62,896 MHz) : 26,64 (s, CHCH₃) ; 26,93 (s, CHCH₃) ; 49,05 (s, J_{SnC} = 53,5 Hz, NCH₃) ; 54,64 (s, CH₂) ; 63,32 (s, CH₂).
RMN ¹¹⁹Sn (C₆D₆ ; 32,248 MHz) : 121,13 (ν_{1/2} = 600 Hz).

### Exemple 2 : [(Me₃SiNCH₂CH₂)₂NMe]Sn

### M = Sn ; R_{M} = Cl ; A = B = -CH₂CH₂- ; L₁ = L₂ = NSiMe₃ ; L₃ = NMe

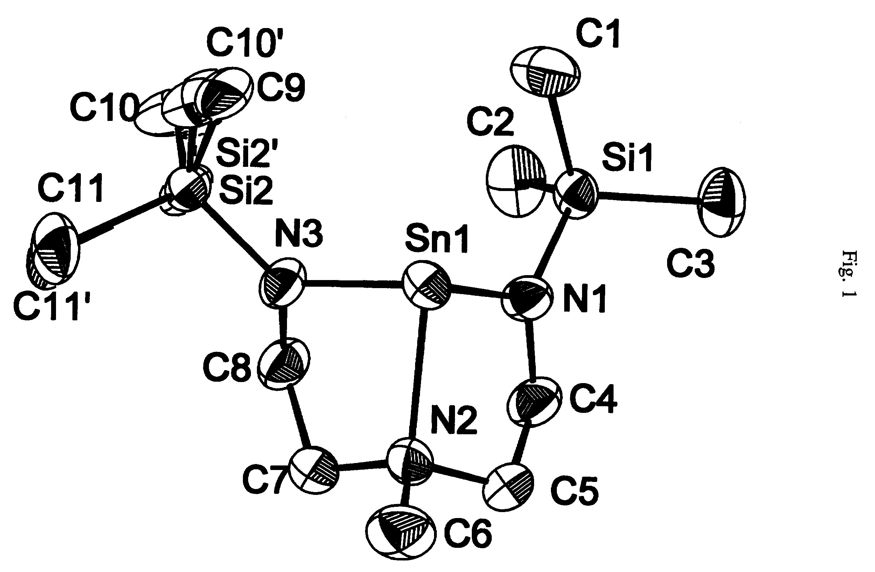

Dans un tube de Schlenk muni d'un barreau aimanté et purgé sous argon, on introduit successivement 1,22 g (4,7 mmol) de [(Me₃SiNCH₂CH₂)₂NMe]²⁻, 2Li⁺ et 20 ml de diéthyléther. Le mélange réactionnel est refroidi à -78 °C, puis on introduit une suspension de 0,89 g (4,7 mmol) de SnCl₂ dans du diéthyléther. Le mélange réactionnel est ramené à température ambiante puis laissé sous agitation pendant 2 heures à température ambiante. La solution est filtrée, le solvant évaporé et le résidu traité au pentane. Après évaporation du solvant, une huile orange est obtenue. Le composé souhaité est isolé sous forme de cristaux blancs par cristallisation à -20°C dans du toluène (5 ml) (rendement 80 %). Ce composé est caractérisé par spectroscopie de résonnance magnétique multinucléaire et diffraction des rayons-X (Figure 1 et tableau 1 ci-dessous). Point de fusion 20 °C.

### Exemple 3: préparation d'un poly(D,L-lactide)

Dans un tube de Schlenk muni d'un barreau aimanté et purgé sous argon, on introduit successivement 0,08 g (0,21 mmol) de [(Me₃SiNCH₂CH₂)₂NMe]Sn, 6,67 g (46,3 mmol) de D,L-lactide et 70 ml de toluène. Le mélange réactionnel est laissé sous agitation à 75 °C pendant 2,5 heures. Le polymère est caractérisé par RMN du carbone et du proton ; la conversion du monomère est de 60 %. Selon une analyse par GPC (Gel Permea Chromatography) à l'aide d'un étalonnage réalisé à partir de standards de polystyrène (PS) de masses 761 à 400000, l'échantillon est composé de polymères ayant des masses voisines (Mw/Mn=1,43) et élevées (Mw = 62500 Dalton).

### Exemple 4 : préparation d'un copolymère (D,L-lactide / glycolide) séquencé

Dans un tube de Schlenk muni d'un barreau aimanté et purgé sous argon, on introduit successivement 0,08 g (0,21 mmol) de [(Me₃SiNCH₂CH₂)NMe]Sn, 5,00 g (34,72 mmol) de D,L-lactide et 70 ml de toluène. Le mélange réactionnel est laissé sous agitation à 75°C pendant 4 heures. Une analyse par RMN du proton permet de vérifier que la conversion du monomère est supérieure à 95 %. A la solution précédente est ajouté 1,00 g (8,6 mmol) de glycolide. Le mélange réactionnel est laissé sous agitation à 75 °C pendant 1 heure. L'analyse d'un aliquot par RMN du proton montre qu'un copolymère est formé. Le rapport des intégrales des signaux correspondants à la partie polylactide (5,20 ppm) et polyglycolide (4,85 ppm) est de 8/1. Selon une analyse par GPC, à l'aide d'un étalonnage réalisé à partir de standards de PS de masses 761 à 400000, ce copolymère est un mélange de macromolécules (Mw/Mn = 2,35) de masses élevées (Mw = 68950 Dalton).

### Exemple 5: modification de la polydispersité d'un copolymère (D,L-lactide / glycolide)

Un copolymère préparé selon l'exemple 4 (Mw/Mn = 2,35 ; est laissé à 75°C pendant 20 heures. L'analyse GPC d'un aliquot montre que la dispersité a augmentée et que la masse reste constante (Mw/Mn = 2,69 ; Mw = 68850 Dalton). Le mélange est à nouveau abandonné 20 heures à 75°C. L'analyse GPC d'un aliquot montre que la dispersité commence à baisser et que la masse reste à peu près constante (Mw/Mn = 2,02 ; Mw = 65659 Dalton). Après 40 heures supplémentaires de chauffage à 75°C, la polydispersité est de 1,53 pour des masses de 62906 Dalton.

### Exemple 6 : préparation d'un copolymère (D,L-lactide / glycolide) aléatoire

Dans un tube de Schlenk muni d'un barreau aimanté et purgé sous argon, on introduit successivement 0,08 g (0,21 mmol) de [(Me₃SiNCH₂CH₂)NMe]Sn, 4,70 g (32,63 mmol) de D,L-lactide et 1,00 g (8,61 mmol) de glycolide. Le mélange réactionnel est chauffé à 178°C pendant 1,2 heures. Le polymère est caractérisé par RMN du carbone et du proton ; la conversion des monomères est totale. Selon une analyse par GPC, à l'aide d'un étalonnage réalisé à partir de standards de PS de masses 761 à 400000, l'échantillon est composé de polymères ayant une polydispersité (Mw/Mn) de 2,24 et des masses (Mw) de 21650 Dalton).

**Tableau 1**

| longueur des liaisons sélectionnées (en Angström) et angles de liaison (en degré) pour le composé de l'exemple 2. | | | |
|---|---|---|---|
| Sn(1)-N(1) | 2,117(6) Å | C(4)-C(5) | 1,497 (11) Å |
| Sn(1)-N(2) | 2,323 (6) Å | C(5)-N(2) | 1,485 (10) Å |
| Sn(1)-N(3) | 2,082 (5) Å | N(2)-C(6) | 1,483 (10) Å |
| N(1)-Si(1) | 1,712 (6) Å | N(2)-C(7) | 1,488 (9) Å |
| N(3)-Si(2) | 1,706 (13) Å | C(7)-C(8) | 1,528 (11) Å |
| N(1)-C(4) | 1,458 (9) Å | C(8)-N(3) | 1,426 (9) Å |
| N(1)-Sn(1)-N(2) | 77,4(2) ° | N(2)-Sn(1)-N(3) | 79,0(2) ° |
| Sn(1)-N(1)-C(4) | 116,7 (4) ° | Sn(1)-N(3)-C(8) | 109,4 (4) ° |
| N(3)-Sn(1)-N(1) | 98,1 (2) ° | | |

## Revendications

**1.** Les composés de formule générale 1 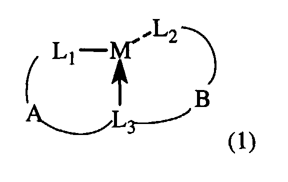 dans laquelle
M représente un élément des groupes 11, 12 ou 14 ;
A et B représentent, indépendamment, une chaîne carbonée de 2 à 4 atomes de carbone, optionellement substituée par l'un des radicaux substitués ou non substitués suivants : alkyle, cycloalkyle ou aryle, dans lesquels ledit substituant est un atome d'halogène, le radical alkyle, nitro ou cyano ;
L₁, L₂ et L₃ représentent, indépendamment, un groupe de formule -E₁₅(R 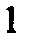 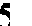 )- dans laquelle
E₁₅ est un élément du groupe 15 et
R₁₅ représente l'atome d'hydrogène ; l'un des radicaux substitués ou non-substitués suivants : alkyle, cycloalkyle ou aryle, dans lesquels ledit substituant est un atome d'halogène, le radical alkyle, nitro ou cyano ; un radical de formule RR'R''E₁₄- dans laquelle E₁₄ est un élément du groupe 14 et R, R' et R'' représentent, indépendamment, l'atome d'hydrogène ou l'un des radicaux substitués ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule SO₂R'₁₅ dans laquelle R'₁₅ représente un atome d'halogène, un radical alkyle, haloalkyle ou aryle éventuellement substitué par un ou plusieurs substituants choisis parmi les radicaux alkyle, haloalkyle et halogène.

**2.** Les composés de formule générale 1 telle que définie à la revendication 1, caractérisée en ce que
M représente un atome d'étain ou de zinc ;
A et B représentent, indépendamment, une chaîne carbonée de 2 à 4 atomes de carbone, et notamment une chaîne carbonée de 2 atomes de carbone ;
L₁, L₂ et L₃ représentent, indépendamment, un radical de formule -E₁₅(R₁₅)- dans laquelle E₁₅ est un atome d'azote ou de phosphore et R₁₅ représente un radical alkyle ou un radical de formule RR'R''E₁₄- dans laquelle E₁₄ représente un atome de carbone ou de silicium et R, R' et R'' représentent, indépendamment, l'atome d'hydrogène ou un radical alkyle.

**3.** Les composés de formule générale 1 et 2 telle que définie à la revendication 2, caractérisée en ce que
A et B représentent, indépendamment, une chaîne carbonée de 2 atomes de carbone ;
L₁, L₂ et L₃ représentent, indépendamment, un radical de formule -E₁₅(R₁₅)- dans laquelle E₁₅ est un atome d'azote et R₁₅ représente un radical méthyle, éthyle, propyle, isopropyle ou un radical de formule RR'R''E₁₄- dans laquelle E₁₄ représente un atome de silicium et R, R' et R'' représentent, indépendamment, l'atome d'hydrogène ou un radical méthyle, éthyle, propyle ou isopropyle.

**4.** Les composés de formule générale 1 telle que définie à l'une des revendications 1 à 3 et répondant aux formules suivantes :
- [(Me₂CHNCH₂CH₂)₂NMe]Sn ;
- [(Me₃SiNCH₂CH₂)₂NMe]Sn.

**5.** Procédé de préparation des produits de formule générale 1 telle que définie à la revendication 1, caractérisé en ce que l'on fait réagir un produit de formule I
(L₁-A-L₃-B-L₂)²⁻, 2Y⁺ I
dans laquelle L₁, A, L₃, B et L₂ ont les significations indiquées à la revendication 1 et Y représente un groupement organométallique, un métal ou l'atome d'hydrogène, avec un produit de formule II
MZ₁Z₂ (II)
dans laquelle M a la significations indiquées à la revendication 1 et Z₁ et Z₂ représentent, indépendamment, un groupe partant, pour obtenir un produit de formule 1.

**6.** Utilisation des produits de formule 1 telle que définie à l'une quelconque des revendications 1 à 4, en tant que catalyseur de polymérisation ou copolymèrisation.

**7.** Utilisation selon la revendication 6 pour la polymérisation ou copolymérisation d'hétérocycles, notamment les époxydes tels que l'oxyde de propylène.

**9.** Utilisation selon la revendications 7, pour la polymérisation ou copolymérisation d'esters cycliques, notamment les esters cycliques polymères de l'acide lactique et/ou glycolique.

**10.** Procédé de préparation de copolymères, séquencés ou aléatoires, ou de polymères qui consiste à mettre en présence un ou plusieurs monomères, un catalyseur de polymérisation et éventuellement un solvant de polymérisation, à une température comprise entre la température ambiante et 250 °C pendant 1 à 300 heures, ledit procédé caractérisé en ce que l'initiateur de chaînes et le catalyseur de polymérisation sont représentés par le même composé qui est choisi parmi les composés selon les revendications 1 à 4.

**11.** Procédé selon la revendication 10, caractérisé en ce que le monomère est choisi parmi les époxydes, et notamment l'oxyde de propène, ou les esters cycliques, et notamment les esters cycliques polymères de l'acide lactique et/ou glycolique.

**12.** Polymères ou copolymères susceptibles d'être obtenus par la mise en oeuvre d'un procédé selon l'une des revendications 10 et 11.
